# EUROPÄISCHE PATENTSCHRIFT

(11) **EP 1 346 142 B1**
(45) Veröffentlichungstag und Bekanntmachung des Hinweises auf die Patenterteilung: **01.06.2005**
(21) Anmeldenummer: 01989054.0
(22) Anmeldetag: 21.12.2001
(51) Int. Cl.: F02M 25/07, F16K 15/03, F16K 1/22

(54) **ABGASRÜCKFÜHRVENTIL MIT SCHWENKBAR MONTIERTER DRUCKREGELPLATTE**
EXHAUST-GAS RECIRCULATION VALVE COMPRISING A PIVOTALLY MOUNTED PRESSURE CONTROL PLATE
VANNE DE RECIRCULATION DES GAZ D'ECHAPPEMENT A PLAQUE DE REGULATION DE LA PRESSION MONTEE PIVOTANTE

(30) Priorität: 22.12.2000 DE 10064215
(43) Veröffentlichungstag der Anmeldung: 24.09.2003
(73) Patentinhaber: A. Kayser Automotive Systems GmbH, 37574 Einbeck (DE)
(72) Erfinder: BIELASS, Ekkerhard, 59555 Lippstadt (DE)
(74) Vertreter: Müller-Boré & Partner Patentanwälte
(86) Internationale Anmeldenummer: PCT/EP2001/015288
(87) Internationale Veröffentlichungsnummer: WO 2002/064965

(56) Entgegenhaltungen:
- EP-A- 1 020 633
- WO-A-98/54460
- DE-A- 3 419 917
- DE-A- 3 814 411
- DE-C- 19 854 461
- US-A- 3 741 179
- US-A- 3 961 608
- US-A- 4 196 745
- US-A- 4 366 799
- US-A- 5 299 548

## Beschreibung

Die Erfindung betrifft eine Abgasrückführungseinrichtung, wie sie in Anspruch 1 beschrieben ist.

Otto- und Dieselmotoren, insbesondere solche von Kraftfahrzeugen, werden üblicherweise mit Abgasrückführungseinrichtungen, insbesondere Abgasrückführungsventilen (AGR-Ventilen) versehen. Durch sie wird dem angesaugten Frischgas teilweise Abgas zugemischt, um die NOx-Emission zu senken sowie um den Kraftstoffverbrauch zu verbessern und Geräuschentstehung zu verringern.

Solche Abgasrückführungseinrichtungen umfassen Zumeßorgane bzw. Steuerorgane, mit denen die Menge des rückgeführten Abgases betriebspunktabhängig eingestellt werden kann. Zu geringe Abgasrückführung würde die angestrebten Wirkungen verfehlen, zu große bei Ottomotoren zu Betriebsstörungen oder einem unerwünschten Anstieg von HC- oder sogar CO-Emissionen führen und bei Dieselmotoren zu einem unerwünschten Anstieg der Partikelemissionen.

Solche Steuerorgane sind in der Regel vollständig schließbare Ventile, die von einer Unterdruckmembran oder einem Stellmotor oder einem gegen eine Feder arbeitenden Proportionalmagneten eingestellt werden, die ihrerseits über ein Taktventil oder ein Relais vom Steuergerät des Motors betätigt werden. Die dazu im Steuergerät verwendeten Informationen sind in der Regel die über Last und Drehzahl des Motors und über die angesaugte Luftmenge. Zur Verbesserung der Arbeitsweise wird auch die Rückmeldung des Öffnungsweges über ein Wegmeßsystem angewandt.

Die Abgasrückführungseinrichtungen liegen zwischen den schwankenden Drükken im Abgassystem und den schwankenden Drücken im Saugsystem des Motors, wobei die Veränderungen dieser Drücke einerseits mit den Veränderungen des Betriebspunktes einhergehen, andererseits vom stoßweisen Austreten des Abgases und vom stoßweisen Ansaugen des Frischgases bestimmt werden.

Diese Druckschwankungen stellen bereits für die Zumeßfunktion der Abgasrückführungseinrichtung bei Saugmotoren ein Problem dar und sind bei aufgeladenen Motoren besonders gravierend. Aus der WO 98/54460 ist eine Abgasrückführungseinrichtung mit Druckkompensation bekannt, bei welcher unter anderem die durchgesetzte bzw. zugemessene Abgasmenge weitgehend unabhängig von auf die Abgasrückführungsreinrichtung einwirkenden Druckschwankungen ist. Neben den verschiedenen Gaszuführungen weist die bekannte Abgasrückführungseinrichtung unter anderem ein Steuerorgan zum Zumessen von Abgas in die Frischgaszuführung auf sowie eine der Frischgaszuführung zugewandte Druckplatte. In der Druckplatte sind kreisförmige Öffnungen vorgesehen, die als Zungenventile ausgebildet sind, deren Zungen bei niedrigen Druckdifferenzen oberhalb der Druckplatte die Öffnungen verschließen. Sofern der Druck oberhalb der Druckplatte größer als der Druck auf der Frischgasseite ist, bewegen sich die Zungen bei einer bestimmten Druckdifferenz von den Öffnungen weg, um einen Durchfluß von Abgas durch die Öffnungen zuzulassen.

Wegen der besonderen Anforderungen bei der Abgasrückführung eines Kraftfahrzeugmotors, insbesondere eines Dieselmotors, bei dem es auf eine sehr genaue Zumessung ankommt, stellt sich die bekannte Abgasrückführungseinrichtung als verbesserungsfähig dar. Dies betrifft insbesondere geringe Abgasrückführungsmengen, da es bei diesen geringen Mengen auf eine genaue Zumessung ankommt, während bei größeren Abgasrückführungsmengen eine größere prozentuale Abweichung vom Zielwert hingenommen werden kann.

Es ist Aufgabe der Erfindung, eine Abgasrückführeinrichtung bereitzustellen, bei welcher auch bei geringen Abgasrückführungsmengen eine möglichst große Varianz der das Steuerorgan betätigenden Stelleinrichtung gegeben ist, um einen langsamen Anstieg der Abgasrückführungsmenge zu Beginn der Abgaszuführung zu erreichen.

Die Aufgabe wird durch eine Abgasrückführungseinrichtung mit den im Anspruch 1 angegebenen Merkmalen gelöst.

Eine erfindungsgemäße Abgasrückführungseinrichtung zum Rückführen von Abgas in eine Gaszuführung von Motoren, insbesondere von Kraftfahrzeugmotoren, umfaßt eine Abgaszuführung, eine Frischgaszuführung und einen in die Gaszuführung mündenden Ausgangskanal, wobei zumindest die Abgaszuführung und die Frischgaszuführung über ein Zumeß- bzw. Steuerorgan miteinander in Verbindung stehen und auf der der Frischgaszuführung zugewandten Seite des Steuerorgans eine Druckplatte angeordnet ist, wobei die Druckplatte aus einer Grundplatte mit Gasdurchtrittsbereichen und wenigstens einer drehbar bzw. verschwenkbar an der Grundplatte angeordneten Schwenkplatte besteht und eine Vorspannung, insbesondere in Form einer Federkraft, zwischen Grundplatte und Schwenkplatte wirkt, um die Schwenkplatte zur Abdeckung der Gasdurchtrittsbereiche an der Grundplatte zu halten bzw. zur Anlage zu bringen.

Befindet sich das Steuerorgan, das insbesondere durch ein Ventil- bzw. Hauptventil gebildet sein kann, in einer partiell oder vollständig geöffneten Stellung, kann Abgas von der Abgasseite der Abgasrückführungseinrichtung in Richtung der Frischgasseite strömen. Die Druckplatte ist derart im Gas- bzw. Abgasstrom in der Abgasrückführungseinrichtung angeordnet, daß sie einen Strömungswiderstand für den sie umströmenden oder durchströmenden Abgasstrom bildet und so beim Durchströmen des Abgases von der Abgasseite in Richtung zur Frischgasseite zu einem partiellen Aufstauen bzw. einer Druckerhöhung des Abgasstroms führt. In diesem Fall ist daher der Gasdruck in einem Raum zwischen dem Steuerorgan und der Druckplatte größer als in einem Raum, der frischgasseitig von der Druckplatte angeordnet ist. Der Unterschied zwischen diesen frischgasund abgasseitig auf die Druckplatte wirkenden Gasdrücken resultiert in einer Kraft, die auf die Druckplatte wirkt. Diese an der Druckplatte angreifende Kraft wird zu einer Beeinflussung bzw. Steuerung der Stellung bzw. des freien Öffnunsquerschnitts des Steuerorgans verwendet werden, so daß sich beispielsweise der freie Öffnungsquerschnitt des Steuerorgans verkleinert, wenn sich eine in Richtung der Frischgasseite bzw. in Schließrichtung des Steuerorgans gerichtete Kraft auf die Druckplatte erhöht. Die Druckplatte kann somit derart ausgebildet sein, daß eine Erhöhung des Druckgefälles zwischen Abgas- und der Frischgasseite der Abgasrückführungseinrichtung zu einer vorbestimmten Verkleinerung des freien Öffnungsquerschnitts des Steuerorgangs und eine Verkleinerung dieses Druckgefälles zu einer vorbestimmten Vergrößerung des freien Öffnungsquerschnitts des Steuerorgans führt.

Die besondere Ausgestaltung der Druckplatte sorgt zusätzlich dafür, daß zu Beginn der Zuführung von Abgas in die Frischgaszuführung kein sprunghaftes Ansteigen der Abgasrückführungsmenge auftritt. Es wird somit erreicht, daß die Veränderung kleiner Abgasrückführungsmengen, beispielsweise bei Verwendung eines elektrischen Magneten bzw. proportional Magneten für die Stelleinrichtung des Steuerorgans, durch eine möglichst große Varianz im Magnetstrom eingestellt werden kann.

Wird in einem Koordinatensystem auf der Abszisse beispielsweise der Magnetstrom aufgetragen und auf der Ordinate die Abgasrückführungsmenge, wird sich die ergebene Mengenkurve schleichend aus der Abszissenachse erheben und somit im Anfangsbereich eine sehr flache Steigung aufweisen. In der Folge ist es möglich, mit der erfindungsgemäß vorgeschlagenen Abgasrückführungseinrichtung den hohen Anforderungen bei der Abgasrückführung im Bereich kleiner Abgasrückführungsmengen zu genügen, was bisher noch nicht möglich gewesen ist. Im geschlossenen Zustand der Abgasrückführungseinrichtung deckt dabei die Schwenkplatte die in der Grundplatte vorgesehenen Gasdurchtrittsbereiche ab, um eine möglichst geringe Abgasmenge durch die bzw. an der Grundplatte vorbei zuzulassen, wobei schon bei kleineren Abgasdurchsätzen die Druckdifferenz an der Druckplatte deutlich ansteigt und damit auch der Strom im beispielsweise eingesetzten elektrischen Magneten bzw. Proportionalmagneten. In an sich bekannter Weise liegt die Druckplatte im geschlossenen Zustand der Abgasrückführungseinrichtung nicht vollständig dichtend an der Wandung der Abgasrückführungseinrichtung an, sondern beläßt einen kleinen Ringspalt, durch den Abgas hindurchströmen kann. Erreicht die Druckdifferenz an der Druckplatte einen bestimmten Wert, wird die Schwenkplatte von der Grundplatte gegen die Vorspannkraft wegbewegt, wodurch ein zusätzlicher Abgasstrom durch die Gasdurchtrittsbereiche der Grundplatte strömen kann.

Gemäß einer bevorzugten Ausführungsform der Erfindung kann die Druckplatte eine kreisförmige oder eliptische Konfiguration aufweisen, was vorteilhaft im Hinblick auf deren Herstellung sowie im Hinblick auf die Gestaltung der Wandung des Abschnittes der Abgasrückführungseinrichtung, in welcher die Druckplatte geführt wird, ist.

Vorteilhafterweise sind die Gasdurchtrittsbereiche der Grundplatte als Gasdruchtrittsöffnungen, die von Teilen der Grundplatte umfaßt sind und/oder freigelassene Bereiche ausgebildet. Je nach Ausbildung der Schwenkplatte, die mit der Grundplatte verbunden ist, stellt dies eine vorteilhafte Ausgestaltung der Druckplatte im Hinblick auf den angestrebten Abgasstrom dar, der somit optimiert gestaltet werden kann.

Zweckmäßigerweise ist die Schwenkachse zwischen Grundplatte und Schwenkplatte, beispielsweise bei kreisförmiger Konfiguration der Druckplatte in der Symmetrieachse, ausgebildet. Bei anderen Konfigurationen der Druckplatte kann es im Hinblick auf den Abgasstrom auch von Vorteil sein, die Symmetrieachse exzentrisch in der Druckplatte auszubilden.

Um den Abgasstrom noch weiter zu optimieren, ist es in einer bevorzugten Ausführungsform möglich, zusätzliche Gasdurchtrittsöffnungen in der Schwenkplatte auszubilden, wobei die Anordnung so erfolgt, daß bei Anlage der Schwenkplatte an der Grundplatte die zusätzlichen Gasdurchtrittsöffnungen und die Gasdurchtrittsbereiche der Grundplatte zueinander versetzt sind.

Vorteilhafterweise kann die Schwenkplatte aus zwei im wesentlichen halbkreisförmigen Klappen bestehen, die in gleicher Richtung von der Grundplatte gegen die Vorspannkraft wegbewegbar ausgebildet sind, um zu verhindern, daß sich Bereiche der Schwenkplatte strömungsbehindernd im Abgasstrom befinden.

Um den Ringspalt, der sich zwischen dem Außenbereich der Druckplatte und der Wandung innerhalb der Abgasrückführungseinrichtung ausbildet, möglichst gering zu halten, ist es in einer bevorzugten Ausführungsform von Vorteil, wenn sich die freien Randbereiche der Klappen bei Anlage an der Grundplatte bis zu dem freien Randbereich der Grundplatte bzw. bis zur Wandung der Abgasrückführungseinrichtung erstrecken.

Zweckmäßigerweise erfolgt die Vorspannung bzw. Haltekraft zwischen der Schwenkplatte und der Grundplatte über eine oder mehrere Federn, insbesondere über Torsionsfedern, die zwischen den vorgenannten Platten angeordnet sind. Der Einsatz von Torsionsfedern ermöglicht es, die gewünschte Federkonstante genau einzustellen, ohne hierfür kostenintensive und komplizierte Konstruktionen verwirklichen zu müssen.

Insbesondere um in der anfänglichen Öffnungsbewegung der Abgasrückführungseinrichtung den Abgasstrom möglichst gering zu halten, ist es zweckmäßig, die Druckplatte so auszubilden und anzuordnen, daß das Abgas im wesentlichen durch die Gasdurchtrittsbereiche bzw. -öffnungen sowie eventuell vorhandene zusätzliche Gasdurchtrittsöffnungen in der Druckplatte bzw. in der Grundplatte und in der Schwenkplatte strömt.

Ebenfalls von Vorteil für den Abgasstrom ist es, wenn in einer bevorzugten Ausführungsform die Druckplatte bei geringen Abgasdurchsätzen das Abgas lediglich durch einen schmalen Spalt zwischen der Druckplatte und der Wandung hindurchtreten läßt, bei wachsendem Druckunterschieden jedoch die Gasdurchtrittsbereiche bzw. -öffnungen sowie eventuell vorhandene zusätzliche Gasdurchtrittsöffnungen durch ein Wegbewegen der Schwenkplatte von der Grundplatte gegen die Vorspannkraft bzw. Haltekraft freigegeben werden. Durch das Verschwenken der Schwenkplatte wird zwischen deren entsprechendem Randbereich und der Wandung der Abgasrückführungseinrichtung zudem ein mit zunehmender Schwenkbewegung größer werdender Abstand bzw. Spalt freigeben, der einen erhöhten Abgasstrom zur Folge hat.

Vorteilhafterweise können zwischen der Grundplatte und der Schwenkplatte Abstandhalter angeordnet sein, die bei Anlage der Schwenkplatte an der Grundplatte eine leichte Öffnungsstellung zwischen diesen zur Folge haben und somit auch einen etwas größeren Abstand bzw. Spalt zwischen dem entsprechenden Randbereich der Schwenkplatte und der Wandung der Abgasrückführungseinrichtung belassen.

Die Erfindung wird im folgenden anhand von bevorzugten Ausführungsformen beispielsweise näher beschrieben. Es zeigen:
- Figur 1: eine schematische Querschnittsdarstellung einer erfindungsgemäßen Abgasrückführungseinrichtung;
- Figur 2: eine erste Ausführungsform einer Druckplatte der Abgasrückführungseinrichtung im Querschnitt und in der Draufsicht;
- Figur 3: eine zweite Ausführungsform einer Druckplatte der Abgasrückführungseinrichtung im Querschnitt und in der Draufsicht;
- Figur 4: eine dritte Ausführungsform einer Druckplatte der Abgasrückführungseinrichtung im Querschnitt und in der Draufsicht;
- Figur 5: eine perspektivische Ansicht einer Grundplatte gemäß einer vierten Ausführungsform der Druckplatte und
- Figur 6: eine perspektivische Ansicht der Grundplatte gemäß Fig. 5 mit einer auf der Grundplatte angeordneten Schwenkplatte in Form zweier Klappen.

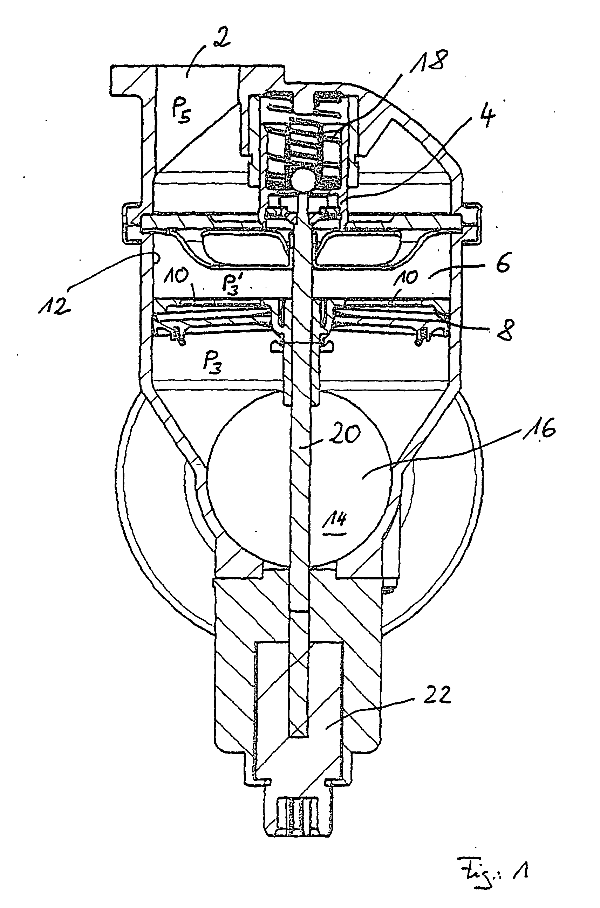

Figur 1 zeigt schematisch einen Querschnitt einer Abgasrückführungseinrichtung. Das Abgas wird mittels eines Abgaskanals bzw. einer Abgaszuführung 2, dessen eine Seite in den Hauptabgasstrom des Motors mündet, der Abgasrückführungseinrichtung zugeführt. Die Abgaszuführung 2 ist über ein Steuerorgan zum Zumessen von Abgas in Form eines Ventils bzw. Hauptventils 4, das aus einem Ventilteller und einem Ventilsitz besteht, mit einer Kammer 6 verbunden. Frischgasseitig ist die Kammer 6 partiell durch eine Druckplatte 8 verschlossen, die einen Strömungswiderstand für Gas bzw. Abgas darstellt. In der Druckplatte 8 sind Gasdurchtrittsöffnungen 10 ausgebildet, durch welche Abgas hindurchströmen kann, wobei auch ein Abgasstrom zwischen dem äußeren Randbereich der Druckplatte 8 und der Wandung 12 des Kanals, in weichem die Druckplatte 8 angeordnet ist, möglich ist. Der durch die Gasdurchtrittsöffnung 10 bzw. am äußeren Rand der Druckplatte 8 hindurchströmende rückgeführte Abgasstrom ist mit einer nicht näher gezeigten Frischgaszuführung 14 und einem Ausgangskanal 16, der die mit dem Abgas versetzten Frischgase weiterführt, verbunden.

Das Hauptventil 4 ist als Kompensationskolben ausgebildet und liegt an seinem Umfang an einer Wand bzw. Seitenwand an und ist über eine Hauptschließfeder 18 abgestützt. Der somit gebildete Kolbenraum kann über eine nichtdargestellte Ausgleichsleitung derart mit der Kammer 6 verbunden sein, daß sich die Gasdrücke im Kolbenraum und der Kammer 6 schnell ausgleichen können.

Der Kompensationskolben und der Ventilteller des Hauptventils 4 sowie die Druckplatte 8 sind miteinander in dieser Reihenfolge über eine Ventilstange 20 verbunden. Die dem Hauptventil 4 gegenüberliegende Seite der Ventilstange 20 ist in einer Stelleinrichtung, beispielsweise in Form eines elektrischen Magneten bzw. Proportionalmagneten 22 angeordnet, über welche das Hauptventil 4 gesteuert bzw. geregelt werden kann.

Der Gasdruck im Einmündungsbereich des rückgeführten Abgasstroms in das Frischgas ist unter Betriebsbedingungen p₃, in der Kammer 6 zwischen Hauptventilteller 4 und der Druckplatte 8 herrscht der Gasdruck p₃' und in der Abgaszuführung 2 liegt der Gasdruck p₅ vor. In allen für die Abgasrückführung relevanten Betriebspunkten eines Saugmotors gilt p₅>p₃. Ein positives, d.h. umgekehrtes Spülgefälle p₅<p₃ kann unter Umständen bei mechanischer oder durch einen Turbolader bewirkter Aufladung des Motors auftreten.

Durch den mit der Druckplatte 8 verbundenen Strömungswiderstand kommt es bei geöffnetem Hauptventil 4 zu einer Erhöhung des Gasdruckes p₃' in der Kammer 6 gegenüber dem Gasdruck p₃ im der Einmündungsbereich. Es gilt somit p₅ > p₃'> p₃.

Bei einer Öffnung des Abgasrückführungs- bzw. Hauptventils 4 wird somit das Abgas in der Regel in der gewünschten Richtung, d.h. von der Abgaszuführung 2 in Richtung des Ausgangskanals 16, strömen. Die durchgesetzte Abgasmenge hängt hierbei im wesentlichen vom Öffnungsquerschnitt des Hauptventils 4 und vom Gasdruckgefälle über das Hauptventil 4, d.h. von der Druckdifferenz p₅ - p₃', ab.

Zur Minimierung des Einflusses dieses Druckgefälles bzw. dieser Druckdifferenz p₅ - p₃ bzw. p₅ - p₃' auf die durchgesetzte Abgasmenge dient die Druckplatte 8. Durch eine geeignete Wahl von Form und Durchmesser der Druckplatte 8 und einer Gestaltung des Gasübertritts von der Kammer 6 zum Ausgangskanal 16 zwischen der Wandung 12 und äußerem Umfang der Druckplatte 8 und/oder durch die Druckplatte 8 hindurch, kann erreicht werden, daß sich bei Vergrößerung bzw. Verkleinerung des Druckgefälles p₅ - p₃ der freie Öffnungsquerschnitts des Hauptventils 4, d.h. der Öffnungsquerschnitt zwischen dem Ventilteller und dem Ventilsitz, gerade um einen solchen Betrag verkleinert bzw. vergrößert, daß die durchgesetzte, rückgeführte Abgasmenge sich nicht mit den obigen Druckschwankungen bzw. Änderungen der Druckdifferenz ändert und eine bestimmbare bzw. vorbestimmte Größe aufweist bzw. so, daß der Abgasanteil im Ausgangskanal 16 konstant bleibt und eine bestimmbare bzw. vorbestimmte Größe aufweist. Der Durchsatz der rückgeführten Abgasmenge ist somit im wesentlichen unabhängig von den Schwankungen bzw. Variationen von frisch- und abgasseitigem Gasdruck (p₅ und p₃) an der Abgasrückführungseinrichtung, d.h. im wesentlichen unabhängig von Änderungen der Gasdruckdifferenz bzw. vom Druckgefälle p₅ - p₃.

Um die durchgesetzte, rückgeführte Abgasmenge weitestgehend vom Druckgefälle p₅ - p₃ durch Gestaltung der Druckplatte 8 und des Gasübertritts an dieser unabhängig zu machen, ist es vorteilhaft, den Kraftbeitrag der in der Ventilstange 20 wirkenden Kraft aufgrund des Druckgefälles p₅ - p₃' zu kompensieren, damit dieser Kraftbeitrag nicht zu einem unerwünschten Öffnen oder Schließen des Hauptventils 4 führt, was die angestrebte Steuerung bzw. Regelung des Abgasdurchsatzes mit der Durckplatte 8 erschweren würde.

Bevorzugt wird die Betätigung des Hauptventils 4 der Abgasrückführungseinrichtung im wesentlichen durch den elektrischen Proportionalmagneten 22 über die Ventilstange 20 erzielt, wobei bei dem Proportionalmagneten 22 die Kraft nur vom Spulenstrom und nicht von der Lage des Ankers abhängig ist. Eine solche Anordnung hat den Vorteil, daß sie schnell reagieren und einen Ventilhub bzw. eine Öffnung des Hauptventils 4 sehr genau einstellen kann. Es ist aber ebenfalls möglich, andere Betätigungen des Hauptventils 4, wie beispielsweise mechanische, pneumatische, hydraulische und elektromotorische vorzunehmen.

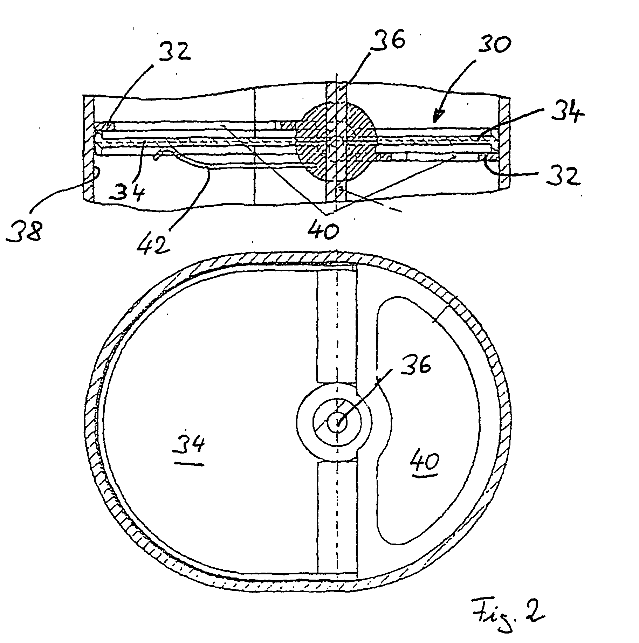

Die nachfolgend in den Figuren 2 bis 6 näher beschriebenen Druckplatten können in der zu Fig. 1 beschriebenen Abgasrückführungseinrichtung mit Vorteil vorgesehen werden, um den Abgasstrom, welcher an der Druckplatte vorbeiströmt bzw. welche durch Gasdurchtrittsöffnungen in der Druckplatte strömt, insbesondere bei kleinen Abgasrückführungsmengen, zu optimieren, indem in der Anfangsöffnungsbewegung des Hauptventils 4 lediglich eine geringe, nicht sprunghaft ansteigende Abgasrückführungsmenge dem Frischgasstrom zugeführt wird. Entsprechende beispielhafte Ausgestaltungsmöglichkeiten der Druckplatte werden nun näher beschrieben.

Fig. 2 zeigt im Querschnitt und in der Draufsicht eine erste Ausführungsform einer Druckplatte 30, die aus einer Grundplatte 32 und einer Schwenkplatte 34 besteht. Die Druckplatte 30 ist in der Abgasrückführungseinrichtung über eine Ventilstange 36 geführt, wobei die Grundplatte 32 fest mit der Ventilstange 36 verbunden ist und somit nur zusammen mit der Ventilstange 36 eine Bewegung ausführen kann. Die äußeren Randbereiche der Grundplatte 32 erstrecken sich bis zur Wandung 38 des Kanals, in welchem die Druckplatte 30 geführt ist und können dabei einen Ringspalt zwischen der Grundplatte 32 und der Wandung 38 belassen. Um einen Abgasstrom durch die Grundplatte 32 zuzulassen, ist diese mit Gasdurchtrittsöffnungen 40 versehen. Aus der Querschnittsdarstellung ist ersichtlich, daß die Grundplatte 32 nicht in eine Ebene als durchgehende Platte ausgebildet ist, sondern in dem Bereich, in welchem die Ventilstange 36 die Druckplatte 30 durchgreift, auf zwei Ebenen versetzt angeordnet ist.

Durch diese spezielle Ausgestaltung der Druckplatte 30, ist es möglich, die einstückige Schwenkplatte 34, die in diesem Ausführungsbeispiel keine Durchgangsöffnungen aufweist,'als einstückige, in einer Ebene verlaufende Platte auszubilden. Die Schwenkplatte 34 ist im Bereich der Ventilstange 36 an diese schwenkbar ausgebildet, so daß sich die Längsachse der Ventilstange 32 als Drehpunkt für die Schwenkplatte 34 darstellt. Aus der Draufsicht läßt sich die elliptische Konfiguration von Druckplatte 30 und Schwenkplatte 34 erkennen sowie die exzentrische Anordnung der Ventilstange 32 im Ventilkanal, wodurch die Druckplatte 30 und die Schwenkplatte 34 aus jeweils einem halbkreisförmigen Teilabschnitt und einem sich daran anschließenden elliptischen Teilabschnitt zusammensetzen. In der Draufsicht ist der rechts neben der Ventilstange 36 dargestellte Bereich unter Weglassung des halbkreisförmigen Teils der Schwenkplatte 34, die in diesem Bereich oberhalb der Druckplatte 30 angeordnet ist, gezeigt. In der Folge ist die Konfiguration der Gasdurchtrittsöffnung 40, die sich als nierenförmiger Ausschnitt aus der Grundplatte 32 darstellt, zu erkennen.

Um ein Verschwenken der Schwenkplatte 34, deren Schwenkbewegung im Querschnitt gesehen gegen den Uhrzeigersinn um die exzentrisch angeordnete Drehachse erfolgt, bei geringen oder keinen Abgasdrücken zu vermeiden, ist unterhalb des größeren Teils der Schwenkplatte 34, also des Bereiches, der sich als Teil einer Ellipse darstellt, eine Feder 42 angeordnet. Die. Feder 42 legt sich mit ihrem freien Ende an der Unterseite der Schwenkplatte 34 an und ist mit ihrem anderen Ende ortsfest im Bereich der Ventilstange 36 angeordnet und übt somit eine Federkraft gegen die mögliche Schwenkrichtung der Schwenkplatte 34 aus. Ab einer bestimmten Druckdifferenz zwischen den oberhalb und unterhalb der Druckplatte 30 anstehenden Drücken kann sich die Schwenkplatte 34 im Uhrzeigersinn gegen die Kraft der Feder 42 verschwenken, um somit einen Gasdurchtritt durch die Gasdurchtrittsöffnungen 40 der Grundplatte 32 zuzulassen, wobei der Gasstrom wegen der in der Schwenkplatte 34 nicht vorhandenen Öffnungen am äußeren freien Rand der Schwenkplatte 34 vorbei in Richtung Frischgaszufuhr strömt. In einer anderen Ausführungsform kann die Schwenkachse der Grundplatte 34 und somit auch die Position der Ventilstange 36 in der Symmetrieachse angeordnet sein, so daß sich die jeweiligen, neben der Ventilstange 36 liegenden Teilbereiche der Grundplatte 32 und der Schwenkplatte 34 als identische Teile, was deren Außenkonfiguration angeht, ausbilden lassen.

Wie auch bei den noch folgenden Ausführungsformen der Druckplatte sind Gasdurchtrittsöffnungen, welche in der Grundplatte und/oder Schwenkplatte angeordnet sind, jeweils so ausgebildet, daß im unverschwenkten Zustand der Schwenkplatte die Gasdurchtrittsöffnungen abgedeckt sind, wodurch sich erst nach Verschwenken der Schwenkplatte ein größerer Gasstrom ergeben kann. Der größere Gasstrom wird zudem dadurch gefördert, daß sich durch das Verschwenken der Schwenkplatte die Randbereiche, die quer zur Schwenkachse ausgerichtet sind, von der Wandung des Ventilkanals wegbewegen, wodurch ein immer größer werdender Spalt zwischen der Wandung des Ventilkanals und dem betreffenden Randbereich der Schwenkplatte freigegeben wird und somit ein immer größer werdender Gasdurchtrittsquerschnitt entsteht.

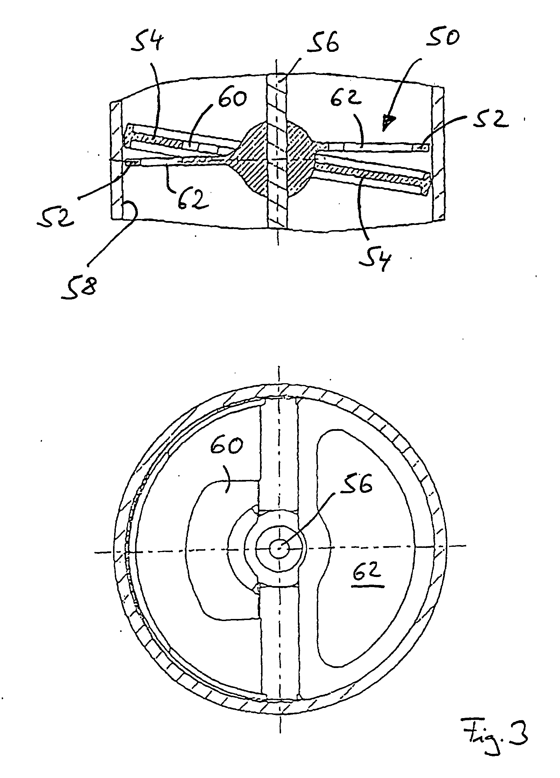

In Fig. 3 ist wiederum im Querschnitt und in der Draufsicht eine weitere alternative Ausgestaltung einer Druckplatte 50 gezeigt. Die Druckplatte 50 besteht auch hier aus einer Grundplatte 52 und einer mit dieser verbundenen Schwenkplatte 54. Die Konfiguration von Grundplatte 52 und Schwenkplatte 54 ist, wie aus der Draufsicht ersichtlich, kreisförmig, wobei die Ventilstange 56 im Mittelpunkt der Druckplatte 50 angeordnet ist. Die Schwenkachse für die Schwenkplatte 54 liegt wiederum in der Längsachse der Ventilstange 56. Es ergibt sich somit eine rotationssymmetrische Schwenkplatte, die wie in Fig. 2 einstückig ausgebildet ist, sich in Fig. 3 allerdings im Uhrzeigersinn von der ortsfest an der Ventilstange 56 angeordneten Grundplatte 52 wegschwenkt. Nicht dargestellt ist in Fig. 3 eine Federkonstruktion, die die Schwenkplatte 54 im nichtausgelenkten Zustand an der Grundplatte 52 zur Anlage bringt. Wie auch in Fig. 2 sind die Grundplatte 52 und die Schwenkplatte 54 wiederum so ausgebildet, daß sie sich mit ihren freien Randbereichen bis an die Wandung 58 erstrecken. Wie auch in Fig. 2 ist die Grundplatte 52 in Fig. 3 nicht in einer Ebene, sondern bezüglich der neben der Ventilstange 56 liegenden Bereiche in zwei Ebenen ausgebildet, um die Anordnung der durchgehenden, in einer Ebene verlaufenden Schwenkplatte 54 zu ermöglichen. Aus der Querschnittsdarstellung ist ersichtlich, daß die Schwenkplatte 54 in der Zeichnung im Bereich des linken halbkreisförmigen Abschnittes zusätzliche Gasdruchtrittsöffnungen 60 aufweist, die bei Anlage der Schwenkplatte 54 an der Grundplatte 52 nicht mit den Gasdurchtrittsöffnungen 62 der Grundplatte fluchten, also zueinander versetzt angeordnet sind, so daß bei Anlage der Schwenkplatte 54 an der Grundplatte 52 ein Gasdurchtritt im unausgelenkten Zustand lediglich im Bereich des äußeren Umfangs von Grundplatte 52 und Schwenkplatte 54 stattfinden kann.

In der Draufsicht auf die Grundplatte 50 gemäß Fig. 3 ist im rechten Bereich, d.h. rechts neben der Ventilstange 56 bzw. rechts neben der Rotationsachse für die Schwenkplatte 54, die Gasdurchtrittsöffnung 62 der Grundplatte 52 zu erkennen. Links davon zeigt sich die zusätzliche Gasdurchtrittsöffnung 60 der Schwenkplatte 54. Sobald die Druckdifferenz auf die Oberseite der Druckplatte 50 im Hinblick auf die Unterseite derselben einen bestimmten Wert übersteigt, wird die Schwenkplatte 54 gegen die Federkraft um ihre Schwenkachse im Uhrzeigersinn ausgelenkt und gibt somit einen Abgasstrom auf der einen Seite durch die zusätzlichen Öffnungen 60 und anschließend durch die Gasdurchtrittsöffnungen 62 der Grundplatte frei und auf der anderen Seite wird ein erhöhter Gasdurchtritt durch die Gasdurchtrittsöffnung 62 der Grundplatte 52 ermöglicht, wobei dieser Gasstrom auf der rechten Seite dann lediglich durch den sich vergrößernden Ringspalt am freien Rand der Schwenkplatte 54 in den Frischgasbereich strömt.

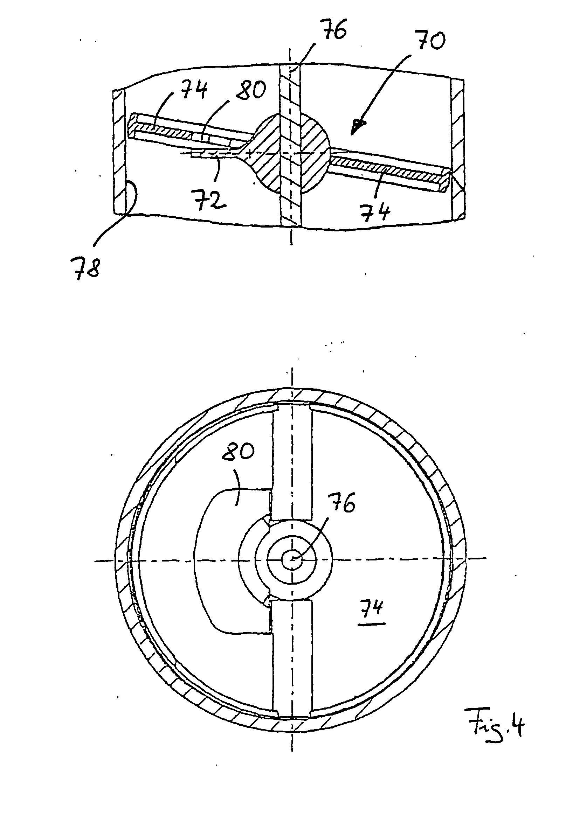

Fig. 4 zeigt eine weitere Alternative einer Druckplatte 70, wiederum bestehend aus einer Grundplatte 72 und einer Schwenkplatte 74. Die Schwenkplatte 74 ist dabei so ausgebildet wie die Schwenkplatte 54 gemäß Fig. 3, also als eine durchgehend, sich über eine Ebene erstreckende, in der Draufsicht kreisförmig erscheinende Schwenkplatte, die auf der einen Seite neben der Ventilstange 76 bzw. neben ihrer Schwenkachse ebenfalls zusätzliche Gasdurchtrittsöffnungen 80 aufweist. Die Druckplatte ist in dieser alternativen Ausführungsform nur noch als einseitige, sich von der Ventilstange. 76 erstreckende Teilplatte ausgebildet, deren freier Rand sich nicht bis hin zur Wandung 78 erstreckt, sondern einen relativ großen Gasdurchtrittsbereich freiläßt. Aus der Draufsicht in Fig. 4 ist die Konfiguration der zusätzlichen Öffnung 60 ersichtlich, die sich als u-förmige oder nierenförmige Öffnung zeigt. Die Druckplatte 70 ist lediglich im Bereich der zusätzlichen Gasdurchtrittsöffnung 80 ausgebildet und kann im wesentlichen die gleiche, lediglich etwas größere Konfiguration wie die Öffnungskonfiguration der Gasdurchtrittsöffnung 80 aufweisen, da es bei dieser Ausführungsform lediglich notwendig ist, daß die Grundplatte 72 bei Anlage der Schwenkplatte 74 die Gasdurchtrittsöffnung 80 abdeckt. Wiederum nicht dargestellt ist die zwischen der Grundplatte 72 und der Schwenkplatte 74 angeordnete Federkonstruktion, die für eine Anlage der Schwenkplatte 74 an der Grundplatte 72 bei einer niedrigen Druckdifferenz sorgt. Auch bei der Druckplatte 70 kommt es bei entsprechend hoher Druckdifferenz zu einer Auslenkung entgegen der Federkraft und zwar in diesem Fall im Uhrzeigersinn, wodurch die zusätzliche Gasdurchtrittsöffnung 80 der Schwenkplatte 74 sich von der Grundplatte 72 wegbewegt und somit einen zusätzlichen Abgasstrom zuläßt. Wie auch bei den vorherigen Ausführungsformen wird durch eine Verschwenken der Schwenkplatte 74 ein größerer Ringspalt zwischen dem äußeren Randbereich der Schwenkplatte 74 und der Wandung 78 freigegeben, was ebenfalls einen größeren Abgasstrom ermöglicht.

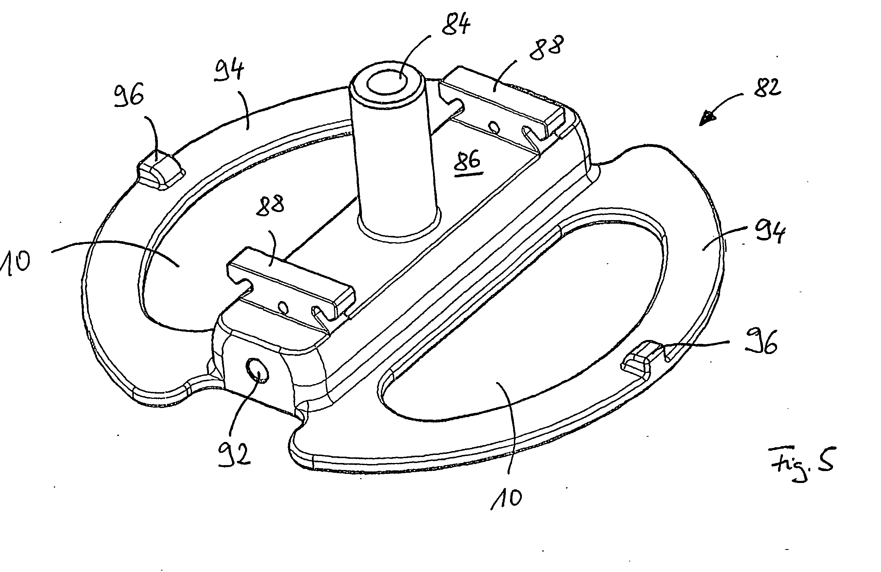

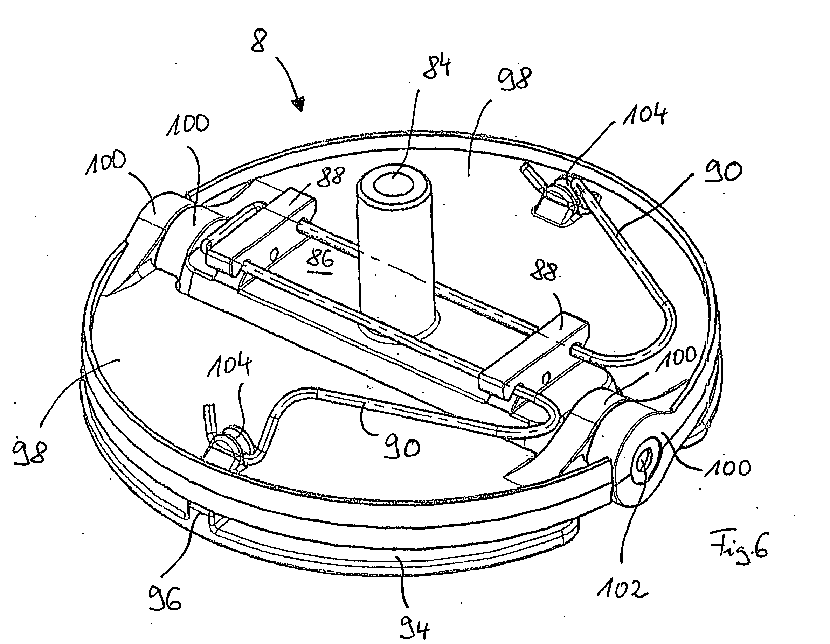

Fig. 5 zeigt in einer perspektivischen Ansicht die Grundplatte 82 der Druckplatte 8 der Abgasrückführungseinrichtung aus Fig. 1. Die Grundplatte 82 weist in der Mitte einen Führungsstutzen 84 für die Ventilstange 20 auf, wobei die Ventilstange 20 den Führungsstutzen 84 durchgreift. Die Grundplatte 82 ist ortsfest an der Ventilstange 20 angeordnet. Benachbart zum Führungsstutzen 84 befindet sich ein Mittelsteg 86, der an seiner Oberseite zwei Haltestege 88 aufweist, die mit jeweils zwei freien Außennehmungen versehen sind, die als Haltepunkte zur Anordnung einer Feder bzw. Torsionsfeder 90 dienen, wie dies in Fig. 6 gezeigt ist. Die freien Enden des Mittelsteges 86 weisen jeweils ein Sackloch 92 auf, in welche nicht dargestellte Stifte zur Anordnung einer Schwenkplatte in Form zweier Klappen 98 (Fig. 6) eingesetzt werden können. Beidseits des Mittelsteges 86 schließen sich jeweils zwei identische, halbkreisförmige Teilbereiche 94 an, deren freie Randbereiche sich in Richtung der Wandung 12 erstrecken, um den Ringspalt zwischen der Druckplatte 8 und der Wandung 12 auszubilden. Die Teilbereiche 94 sind nicht vollwandig ausgebildet, sondern weisen Gasdurchtrittsbereiche in Form von Gasdruchtrittsöffnungen 10 auf. Die Längserstreckung des Mittelsteges 86 quer zum Führungsstutzen 84 gesehen erstreckt sich nicht bis zum äußeren Rand des Kreises, der durch die halbkreisförmigen Teilbereiche 94 gebildet wird, so daß sich im Anschlußbereich der halbkreisförmigen Teilbereiche 94 an dem Mittelsteg 86 rückspringende Bereiche bilden, die der Anordnung des Verdrehmechanismus der Klappen 98 dienen, wie dies in Fig. 6 gezeigt ist. Auf der den Klappen 94 zugewandten Oberseite der Grundplatte 82 bzw. der Teilbereiche 94 sind höckerartige Erhebungen bzw. Abstandhalter 96 vorgesehen, die sich nach oben in Richtung des freien Endes des Führungstutzens 84 erstrecken und sozusagen auf den sich als Halbkreisringe darstellenden Teilbereichen 94 aufsitzen. In der Folge kommen, wie dies in Fig. 6 dargestellt ist, die Klappen 98 nicht auf der gesamten Oberfläche der Teilbereiche 122 zur Anlage, sondern lediglich im Bereich der freien Enden der Abstandhalter 96. Insgesamt ist die Grundplatte 82 symmetrisch zur Längsachse des Mittelstegs 86 bzw. zur Mittelachse der Sacklöcher 92 ausgebildet.

In Fig. 6 ist in einer perspektivischen Ansicht die vollständige Druckplatte 8 dargestellt, d.h. die Grundplatte 82 zusammen mit der an dieser angeordneten Schwenkplatte in Form von zwei, voneinander unabhängigen einzelnen Klappen 98, die halbkreisförmig ausgebildet sind. Um ein Verschwenken der beiden Klappen 98 bzw. ein Wegschwenken von der Grundplatte 82 zu ermöglichen, weisen die äußeren im Bereich des Mittelsteges liegenden Randbereiche der Klappen 98 scharnierartige Gelenke 100 auf. Dabei hat jede Klappe ein paar solcher Gelenke 100, die eine Durchgangsbohrung 102 aufweisen. Im zusammengebauten Zustand sind die Klappen 98 so ausgebildet, daß die Durchgangsbohrungen 102 benachbarter Gelenke 100 miteinander fluchten. In Längsachsenrichtung des Mittelstegs 86 gesehen befinden sich an den äußeren Randbereichen der beiden Klappen 98 somit jeweils ein Paar solcher Gelenke 100 mit fluchtenden Durchgangsbohrungen 102, die wiederum mit dem Sackloch 92 der Grundplatte 82 fluchten. Somit kann für jedes Paar von Gelenken 100 eine verdrehbare Verbindung geschaffen werden, indem nicht dargestellte Stifte durch die beiden Durchgangsbohrungen 102 der beiden Gelenke 100 hindurch, in die Sacklöcher 92 greifen. Damit wird es ermöglicht, daß sich jede Klappe 98 unabhängig voneinander von der Grundplatte 83 wegbewegen kann und zwar in der Fig. 6 nach oben.

Um die Klappen 98 zur Anlage an der Grundplatte 82 zu bringen, ist auf der der Grundplatte 82 gegenüberliegenden Oberseite der Klappen 98 die Feder bzw. Torsionsfeder 90 angeordnet. Die Torsionsfeder 90 ist in ihrer Konfiguration in etwa W-förmig ausgebildet und weist in ihrem Mittelabschnitt einen u-förmigen Sektor auf, dessen Stege in die Ausnehmungen an den Haltestegen 88 so eingreifen, daß sie lagesicher angeordnet sind, sich also nicht von den Haltestegen 88 wegbewegen kann. Die beiden freien Enden der Torsionsfeder 90 sind nach oben in Richtung des freien Endes des Führungsstutzens 84 weggebogen und greifen in diesem Bereich in auf der Oberseite der Klappen 98 angeordnete Federhalterungen 104 ein, in welche sie sich unter Vorspannung einlegen. Die insoweit klammerartig ausgebildete Torsionsfeder 90 drückt somit die Klappen 98 in Richtung der Grundplatte 82, wobei die Klappen 98 auf den Abstandhaltem 96 der Grundplatte 82 zur Anlage kommen und dort vorgespannt gehalten sind. Die Federspannung ergibt sich durch Torsion der beiden u-förmigen, im Bereich des Mittelsteges angeordneten Abschnitte der Torsionsfeder 90. Durch geeignete Materialwahl und Stärke der u-förmigen Bereiche der Torsionsfeder 90 kann eine gewünschte Federkonstante auf einfache Weise vorgewählt werden.

Sofern die Gasdruckdifferenz des Gasdrucks p₃' zwischen Hauptventil 4 und der Druckplatte 8 sowie des unterhalb der Druckplatte anstehenden Gasdrucks p₃ im Einmündungsbereich des rückgeführten Abgasstromes in den Ausgangskanal 16 groß genug ist, können sich die Klappen 98 gegen die Kraft der Torsionsfeder 90 von der Grundplatte 82 wegbewegen und somit die in der Ausgangslage abgedeckten Gasdurchtrittsöffnungen 10 freigeben, indem sich ein größerer Ringspalt zwischen den äußeren Randbereichen der Klappen 98 und der Wandung 12 einstellt (siehe auch Fig. 1). Es kommt aber bereits vor dem Wegschwenken der Klappen 98 zu einem geringen Abgasstrom im Randbereich bzw. Ringspalt der Druckplatte 8, da die freien Randbereiche der Klappen 98 sowie die freien Randbereiche der Grundplatte 82 nicht dichtend an der Wandung 12 anliegen. Zudem sind die Klappen 98 aufgrund der Abstandhalter 96 jeweils schräg zur Grundplatte 82 ausgerichtet, wodurch sich im freien Randbereich der Klappen 98, zur Wandung 12 hin gesehen, ein etwas vergrößerter Ringspalt ergibt, durch den ein Abgasstrom hindurchtreten kann, der durch die leichte Offenstellung der Klappen 98 in Bezug auf die Grundplatte 82 einen Gasstrom im nicht ausgelenkten Zustand der Klappen 98 auch zusätzlich durch die Gasdurchtrittsöffnungen 10 der Grundplatte 82 zuläßt.

### Bezugszeichenliste

- 2: Abgaszuführung
- 4: Hauptventil
- 6: Kammer
- 8: Druckplatte
- 10: Gasdurchtrittsöffnung
- 12: Wandung
- 14: Frischgaszuführung
- 16: Ausgangskanal
- 18: Hauptschließfeder
- 20: Ventilstange
- 22: Proportionalmagnet
- 30: Druckplatte
- 32: Grundplatte
- 34: Schenkplatte
- 36: Ventilstange
- 38: Wandung
- 40: Gasdurchtrittsöffnung
- 42: Feder
- 50: Druckplatte
- 52: Grundplatte
- 54: Schwenkplatte
- 56: Ventilstange
- 58: Wandung
- 60: zusätzliche Gasdurchtrittsöffnung
- 62: Gasdurchtrittsöffnung
- 70: Druckplatte
- 72: Grundplatte
- 74: Schwenkplatte
- 76: Ventilstange
- 78: Wandung
- 80: zusätzliche Gasdurchtrittsöffnung
- 82: Grundplatte
- 84: Führungsstutzen
- 86: Mittelsteg
- 88: Haltesteg
- 90: Torsionsfeder
- 92: Sackloch
- 94: Teilbereich
- 96: Abstandhalter
- 98: Klappe
- 100: Gelenk
- 102: Durchgangsbohrung
- 104: Federhalterung

## Patentansprüche

1. Abgasrückführungseinrichtung zum Rückführen von Abgas in eine Gaszuführung von Motoren, insbesondere von Kraftfahrzeugmotoren, mit einer Abgaszuführung (2), einer Frischgaszuführung (14) und einem in die Gaszuführung mündenden Ausgangskanal (16),
wobei zumindest die Abgaszuführung (2) und die Frischgaszuführung (14) über ein Steuerorgan (4) zum Zumessen von Abgas miteinander in Verbindung stehen und auf der der Frischgaszuführung (14) zugewandten Seite des Steuerorgans (4) eine Druckplatte (8; 30; 50; 70) angeordnet ist, **dadurch gekennzeichnet, daß** die Druckplatte aus einer Grundplatte (32; 52; 72; 82) mit Gasdurchtrittsbereichen (10; 40; 62) und wenigstens einer drehbar bzw. verschwenkbar an der Grundplatte angeordneten Schwenkplatte (34; 54; 74) besteht und eine Vorspannung bzw. Haltekraft, insbesondere in Form einer Federkraft (90), zwischen Grundplatte und Schwenkplatte zur Abdeckung der Gasdurchtrittsbereiche wirkt, um die Schwenkplatte zur Abdeckung der Gasdurchtrittsbereiche an der Grundplatte zur Anlage zu bringen.

2. Abgasrückführungseinrichtung nach Anspruch 1, wobei die Druckplatte eine kreisförmige (8; 50; 70) oder elliptische (30) Konfiguration aufweist.

3. Abgasrückführungseinrichtung nach Anspruch 1 oder 2, wobei die Gasdurchtrittsbereiche der Grundplatte als von Teilen der Grundplatte umfaßte Gasdurchtrittsöffnungen (10; 40; 62) und/oder freigelassene Bereiche ausgebildet sind.

4. Abgasrückführungseinrichtung nach einem oder mehreren der Ansprüche 1 bis 3, wobei die Schwenkache zwischen Grundplatte und Schwenkplatte in der Symmetrieache der Druckplatte oder exzentrisch von dieser ausgebildet ist.

5. Abgasrückführungseinrichtung nach einem oder mehreren der Ansprüche 1 bis 4, wobei in der Schwenkplatte zusätzliche Gasdurchtrittsöffnungen (60, 80) ausgebildet sind, die bei Anlage der Schwenkplatte an der Grundplatte versetzt zu den Gasdurchtrittsbereichen (10; 40; 62) der Grundplatte angeordnet sind.

6. Abgasrückführungseinrichtung nach einem oder mehreren der Ansprüche 1 bis 6, wobei die Schwenkplatte aus zwei in wesentlichen halbkreisförmigen Klappen (98) besteht, die in gleicher Richtung von der Grundplatte (82) entgegen der Vorspannkraft (90) wegbewegbar ausgebildet sind.

7. Abgasrückführungseinrichtung nach Anspruch 6, wobei sich die freien Randbereiche der Klappen (98) bei Anlage an der Grundplatte (82) bis zu dem freien Randbereich der Grundplatte bzw. bis zur Wandung (12) der Abgasrückführungseinrichtung erstrecken.

8. Abgasrückführungseinrichtung nach einem oder mehreren der Ansprüche 1 bis 7, wobei eine oder mehrere Federn, insbesondere Torsionsfedern (90), zwischen der Grundplatte (82) und der Schwenkplatte (98) angeordnet sind.

9. Abgasrückführungseinrichtung nach einem oder mehreren der Ansprüche 1 bis 8, wobei die Druckplatte (8; 30; 50) derart ausgebildet und angeordnet ist, daß das Abgas im wesentlichen durch die Gasdurchtrittsbereiche bzw. - öffnungen (10; 40; 62; 60; 80) in der Druckplatte strömt.

10. Abgasrückführungseinrichtung nach einem oder mehreren der Ansprüche 1 bis 9, wobei die Druckplatte (8; 30; 50, 70) bei geringen Abgasdurchsätzen das Abgas lediglich durch einen schmalen Spalt zwischen Druckplatte und Wandung der Abgasrückführungseinrichtung hindurchtreten läßt, bei wachsenden Druckunterschieden jedoch die Gasdurchtrittsbereiche bzw.-öffnungen (10; 40, 62) durch ein Wegbewegen der Schwenkplatte von der Grundplatte und der Wandung der Abgasrückführungseinrichtung freigegeben werden.

11. Abgasrückführungseinrichtung nach einem der Ansprüche 1 bis 10, wobei zwischen der Grundplatte (82) und der Schwenkplatte wenigstens ein Abstandhalter (96) angeordnet ist.

12. Abgasrückführungseinrichtung nach einem der Ansprüche 1 bis 11, wobei das Steuerorgan (4) durch eine mechanische, pneumatische, hydraulische, magnetische oder elektrische Stelleinrichtung, insbesondere einen elektrischen Magneten bzw. Proportionalmagneten (22), betätigbar ist.

## Claims

1. Exhaust gas recirculation device for the recirculation of exhaust gas into a gas supply of engines, in particular of motor vehicle engines, with an exhaust-gas supply (2), with a fresh-gas supply (14) and with an outlet duct (16) issuing into the gas supply, at least the exhaust-gas supply (2) and the fresh gas supply (14) being connected to one another via a control member (4) for the metering of exhaust gas, and a pressure plate (8; 30, 50; 70) being arranged on that side of the control member (4) which faces the fresh-gas supply (14), **characterized in that** the pressure plate consists of a baseplate (32; 52; 72; 82) with gas passage regions (10; 40; 62) and of at least one pivoting plate (34; 54; 74) arranged rotatably or pivotably on the baseplate, and a prestress or holding force, in particular in the form of a spring force (90), acting between the baseplate and the pivoting plate to cover the gas passage regions, in order to bring the pivoting plate to bear on the baseplate in order to cover the gas passage regions.

2. Exhaust-gas recirculation device according to Claim 1, the pressure plate having a circular (8; 50; 70) or elliptic (30) configuration.

3. Exhaust-gas recirculation device according to Claim 1 or 2, the gas passage regions of the baseplate being designed as gas passage orifices (10; 40; 62) surrounded by parts of the baseplate and/or as regions left free.

4. Exhaust-gas recirculation device according to one or more of Claims 1 to 3, the pivot axis between the baseplate and the pivoting plate being formed in the axis of symmetry of the pressure plate or eccentrically with respect to this.

5. Exhaust-gas recirculation device according to one or more of Claims 1 to 4, the pivoting plate having formed in it additional gas passage orifices (60, 80) which, when the pivoting plate bears on the baseplate, are arranged so as to be offset with respect to the gas passage regions (10; 40; 62) of the baseplate.

6. Exhaust-gas recirculation device according to one or more of Claims 1 to 6, the pivoting plate consisting of two essentially semicircular flaps (98) which are designed to be capable of being moved away from the baseplate (82) in the same direction counter to the prestressing force (90).

7. Exhaust-gas recirculation device according to Claim 6, the free edge regions of the flaps (98), when these bear on the baseplate (82), extending as far as the free edge region of the baseplate or as far as the wall (12) of the exhaust-gas recirculation device.

8. Exhaust-gas recirculation device according to one or more of Claims 1 to 7, one or more springs, in particular torsion springs (90), being arranged between the baseplate (82) and the pivoting plate (98).

9. Exhaust-gas recirculation device according to one or more of Claims 1 to 8, the pressure plate (8; 30; 50) being designed and arranged in such a way that the exhaust gas flows essentially through the gas passage regions or gas passage orifices (10; 40; 62; 60; 80) in the pressure plate.

10. Exhaust-gas recirculation device according to one or more of Claims 1 to 9, the pressure plate (8; 30; 50, 70), in the case of low exhaust-gas throughputs, allowing the exhaust gas to pass only through a narrow gap between the pressure plate and the wall of the exhaust-gas recirculation device, but, in the case of growing pressure differences, the gas passage regions or gas passage orifices (10; 40, 62) being opened as a result of movement of the pivoting plate away from the baseplate and the wall of the exhaust-gas recirculation device.

11. Exhaust-gas recirculation device according to one of Claims 1 to 10, at least one spacer (96) being arranged between the baseplate (82) and the pivoting plate.

12. Exhaust-gas recirculation device according to one of Claims 1 to 11, the control member (4) being capable of being actuated by means of a mechanical, pneumatic, hydraulic, magnetic or electrical actuating device, in particular an electrical magnet or proportional magnet (22).

## Revendications

1. Installation de recyclage des gaz d'échappement destinée à recycler les gaz d'échappement dans une amenée de gaz de moteurs, en particulier de moteurs de véhicules automobiles, comprenant une amenée des gaz d'échappement (2), une amenée du gaz d'affinage (14) et un canal de sortie (16) débouchant dans l'amenée de gaz,
au moins l'amenée des gaz d'échappement (2) et l'amenée du gaz d'affinage (14) étant reliées l'une à l'autre par l'intermédiaire d'un organe de commande (4) destiné à distribuer les gaz d'échappement et une plaque de compression (8 ; 30 ; 50 ; 70) étant disposée sur le côté de l'organe de commande (4) tourné vers l'amenée du gaz d'affinage (14), **caractérisée en ce que** la plaque de compression est constituée d'une plaque de base (32 ; 52 ; 72 ; 82) comprenant des zones de passage du gaz (10 ; 40 ; 62) et d'au moins une plaque pivotante (34 ; 54 ; 74) disposée de façon rotative et/ou pivotante sur la plaque de base et provoque une précontrainte et/ou une force de retenue, en particulier sous forme d'une force de ressort (90), entre la plaque de base et la plaque pivotante destinée à recouvrir les zones du passage du gaz, afin d'amener la plaque pivotante, destinée à recouvrir les zones de passage du gaz, en appui contre la plaque de base.

2. Installation de recyclage des gaz d'échappement selon la revendication 1, la plaque de compression comprenant une configuration circulaire (8 ; 50 ; 70) ou elliptique (30).

3. Installation de recyclage des gaz d'échappement selon la revendication 1 ou 2, les zones de passage du gaz de la plaque de base étant conçues comme des ouvertures de passage du gaz (10 ; 40 ; 62) entourées par des parties de la plaque de base et/ou des zones laissées libres.

4. Installation de recyclage des gaz d'échappement selon l'une ou plusieurs des revendications 1 à 3, l'axe de pivotement entre la plaque de base et la plaque pivotante étant conçu dans l'axe de symétrie de la plaque de compression ou de manière excentrée par rapport à celle-ci.

5. Installation de recyclage des gaz d'échappement selon l'une ou plusieurs des revendications 1 à 4, des ouvertures de passage du gaz (60, 80) additionnelles étant conçues dans la plaque pivotante, lesquelles ouvertures sont disposées, lorsque la plaque pivotante est en appui contre la plaque de base, de façon décalée par rapport aux zones de passage du gaz (10 ; 40 ; 62) de la plaque de base.

6. Installation de recyclage des gaz d'échappement selon l'une ou plusieurs des revendications 1 à 6, la plaque pivotante étant constituée de deux clapets (98) sensiblement semi-circulaires, qui sont conçus de manière à se déplacer dans la même direction à distance de la plaque de base (82) à l'encontre de la force de précontrainte (90).

7. Installation de recyclage des gaz d'échappement selon la revendication 6, les zones marginales libres des clapets (98), lorsqu'elles sont en appui contre la plaque de base (82), s'étendant jusqu'à la zone marginale libre de la plaque de base et/ou jusqu'à la paroi (12) de l'installation de recyclage des gaz d'échappement.

8. Installation de recyclage des gaz d'échappement selon l'une ou plusieurs des revendications 1 à 7, un ou plusieurs ressort(s), en particulier des ressorts de torsion (90), étant disposé(s) entre la plaque de base (82) et la plaque pivotante (98).

9. Installation de recyclage des gaz d'échappement selon l'une ou plusieurs des revendications 1 à 8, la plaque de compression (8 ; 30 ; 50) étant conçue et disposée de telle sorte que les gaz d'échappement circulent sensiblement à travers les zones et/ou les ouvertures de passage du gaz (10 ; 40 ; 62 ; 60 ; 80) dans la plaque de compression.

10. Installation de recyclage des gaz d'échappement selon l'une ou plusieurs des revendications 1 à 9, la plaque de compression (8 ; 30 ; 50 ; 70), lorsque les débits des gaz d'échappement sont faibles, laissant entrer les gaz d'échappement uniquement à travers une fente étroite entre la plaque de compression et la paroi de l'installation de recyclage des gaz d'échappement, mais dans le cas de différences de pression croissantes, les zones et/ou les ouvertures de passage du gaz (10 ; 40 ; 62) étant libérées par un déplacement de la plaque pivotante à distance de la plaque de base et de la paroi de l'installation de recyclage des gaz d'échappement.

11. Installation de recyclage des gaz d'échappement selon l'une des revendications 1 à 10, une entretoise (96) étant disposée entre la plaque de base (82) et la plaque pivotante.

12. Installation de recyclage des gaz d'échappement selon l'une des revendications 1 à 11, l'organe de commande (4) pouvant être actionné par un dispositif de commande mécanique, pneumatique, hydraulique, magnétique ou électrique, en particulier un aimant électrique et/ou un aimant proportionnel (22).
